# EUROPÄISCHE PATENTSCHRIFT

(11) **EP 3 946 999 B1**
(45) Veröffentlichungstag und Bekanntmachung des Hinweises auf die Patenterteilung: **07.06.2023**
(21) Anmeldenummer: 20717813.8
(22) Anmeldetag: 02.04.2020
(51) Int. Cl.: B60K 11/08, F01P 7/10

(54) **SEQUENTIELLE LAMELLENJALOUSIESCHALTUNG**
SEQUENTIAL SWITCHING OF VENETIAN BLINDS
COMMUTATION SÉQUENTIELLE DE STORE À LAMELLES

(30) Priorität: 05.04.2019 DE 102019108990
(43) Veröffentlichungstag der Anmeldung: 09.02.2022
(73) Patentinhaber: Montaplast GmbH, 51590 Morsbach (DE)
(72) Erfinder: MÜLLER, Johannes, 51545 Waldbröl (DE); THANHEISER, Andreas, 53229 Bonn (DE); MIKA, Frank, 51588 Nümbrecht (DE)
(74) Vertreter: Bobzien, Hans Christoph
(86) Internationale Anmeldenummer: PCT/EP2020/059354
(87) Internationale Veröffentlichungsnummer: WO 2020/201401

(56) Entgegenhaltungen:
- EP-A2- 2 233 343
- DE-A1-102008 061 054
- DE-U1-202011 050 523
- DE-U1-202017 106 531

## Beschreibung

Die vorliegende Erfindung betrifft eine sequentielle Lamellenjalousieschaltung insbesondere für die Steuerung des in den Motorraum einströmenden Fahrtwindes. Die Jalousien bestehen im Allgemeinen aus einer Mehrzahl von übereinander angeordneten Lamellen, die in einem nach vorne und hinten offenen Gehäuse in der seitlichen Gehäusewand durch Zapfen drehbar gelagert sind. Bei geschlossener Jalousie überlappen die Lamellen in senkrechter Stellung und verhindern das Eindringen des Fahrtwindes in den Motorraum. Bei offener Jalousie nehmen die Lamellen eine waagerechte Stellung ein, so dass der Fahrtwind zur Motorkühlung zwischen den Lamellen in den Motorraum eindringen kann. Die Stellung der Lamellen ist durch einen zur Jalousie seitlich angeordneten Aktuator veränderbar. Dabei wirkt der Aktuator im Allgemeinen auf eine der Lamellen und die Drehbewegung der angetriebenen Lamelle wird mittels einer Koppelstange, in der parallel zu den Drehachsen der Lamellen vorgesehene exzentrische Zapfen geführt werden, übertragen.

Bei modernen Kraftfahrzeugen werden unterschiedliche Aggregate durch getrennt schaltbare Lamellenjalousien abgedeckt. Beispielsweise ist eine Hauptjalousie für die Abdeckung des Motorkühlers und mindestens eine Nebenjalousie für weitere im Motorraum angeordnete Aggregate wie Ölkühler, Bremsen, usw. vorgesehen. Dabei werden nach dem Stand der Technik im Allgemeinen für jede Jalousie ein eigener Aktuator eingesetzt.

Die DE 10 2011 055 394 A1 offenbart eine Luftklappenanordnung, wobei verschiedene Luftklappenelemente mit nur einer Antriebsvorrichtung sehr aufwendig asynchron ansteuerbar sind.

Die DE 20 2011 050523 U1 offenbart außerdem eine Vorrichtung zur sequentiellen Schaltung von mindestens einer ersten und mindestens einer zweiten Lamellenjalousie, deren Lamellen mittels mindestens je einer Koppelstange synchron drehend zum Öffnen und Schließen der Jalousien bewegbar sind.

Aufgabe der Erfindung ist es, eine einfache Lösung für die sequentielle/asynchrone Schaltung von Haupt- und Nebenjalousie mit nur einem Aktuator anzugeben.

Diese Aufgabe wird durch die unabhängigen Ansprüche gelöst.

Gegenstand der Erfindung ist demgemäß eine erste Vorrichtung zur sequentiellen Schaltung von mindestens einer ersten und mindestens einer zweiten Lamellenjalousie, deren Lamellen mittels mindestens je einer Koppelstange synchron drehend zum Öffnen und Schließen der Jalousien bewegbar sind, umfassend einen Aktuator zur Erzeugung einer Drehbewegung der Lamellen um 80° bis 90°, einer Kupplung zur drehfesten Ankupplung des Aktuators an eine Lamelle der ersten Jalousie, eine Kulissenstange, die eine teilkreisförmige Kulisse aufweist, der Aktuator einen zu seiner Drehachse parallelen exzentrischen Zapfen aufweist, der in die teilkreisförmige Kulisse der Kulissenstange eingreift, so dass bei Drehung der Achse des Aktuators die Kulissenstange in eine Linearbewegung versetzt wird, die in eine Drehbewegung der Lamellen der zweiten Jalousie übersetzt wird. Der exzentrische Zapfen ann auf einer mit dem Aktuator drehfest verbundenen Kurbelscheibe angeordnet sein.

Bei übereinander angeordneten Haupt- und Nebenjalousien kann die Kulissenstange durch ihre Vertikalbewegung gleichzeitig die Aufgabe der Koppelstange für die Übersetzung der Vertikalbewegung in die Drehbewegung der Lamellen der Nebenjalousie übernehmen.

Bei nebeneinander angeordneten Haupt- und Nebenjalousien oder bei unterschiedlich breiten Haupt- und Nebenjalousien kann eine ortsfest am Jalousiegehäuse drehbar festgelegte Übertragungsstange vorgesehen sein, wobei das andere Ende der Kulissenstange an einem Schwenkhebel die Übertragungsstange angreift und die Übertragungsstange mit der Koppelstange der mindestens zweiten Jalousie über einen Gelenkhebel gekoppelt ist.

Der Radius des Teilkreises der teilkreisförmigen Kulisse entspricht bevorzugt dem Abstand des exzentrischen Zapfens von der Drehachse des Aktuators und der Teilkreis kann sich über einen Winkelbereich von 80° bis 350°, bevorzugt über einen Winkelbereich von 80° bis 110°, insbesondere bevorzugt etwa 90°, erstrecken.

Als Aktuator ist insbesondere ein elektrisch angetriebener Schrittmotor geeignet, der in Abhängigkeit von den in der Motorsteuerung vorliegenden Temperaturmessdaten, wie Außentemperatur, Kühlwassertemperatur, Öltemperatur, etc., sowie ggf. der Fahrgeschwindigkeit von der Motorsteuerung angesteuert wird.

Soll eine erste Jalousie geschlossen werden, wird der Aktuator zunächst über die Kupplung, die als Magnetkupplung ausgebildet sein kann, mit der angetriebenen Lamelle dieser ersten Jalousie verbunden. Die Drehbewegung des Motors schließt die Jalousie, wobei gleichzeitig der exzentrische Zapfen des Aktuators die Kulisse durchwandert. Ist der Zapfen am Ende der Kulisse angekommen, wird der Aktuator entkuppelt. Zur Schließung einer zweiten Jalousie wird die Drehbewegung des Aktuators fortgesetzt, wodurch die Kulissenstange in eine lineare Bewegung versetzt wird, die über die Übertragungsstange auf die zweite Jalousie und die dieser zugeordneten Koppelstange bzw. direkt die anschließende Schließung der zweiten Jalousie bewirkt. Die Öffnung der Jalousien erfolgt durch Umkehr der Drehrichtung des Aktuators.

Soll nur die zweite Jalousie geschlossen werden, wird der Aktuator von Beginn an entkuppelt.

Gegenstand der Erfindung ist weiterhin eine zweite Vorrichtung zur sequentiellen Schaltung von mindestens einer ersten und einer zweiten Lamellenjalousie, deren Lamellen mittels mindestens je einer Koppelstange synchron drehend zum Öffnen und Schließen der Jalousien bewegbar sind, umfassend einen Aktuator zur Erzeugung einer Drehbewegung der Lamellen um 80° bis 90°, eine Kulissenstange, die eine teilkreisförmige Kulisse aufweist, wobei der Aktuator zwei zu seiner Drehachse parallele exzentrische Zapfen aufweist, die um 70° bis 110° umfangsversetzt sind, wobei einer der Zapfen in die teilkreisförmige Kulisse der Kulissenstange eingreift, wobei das andere Ende der Kulissenstange entweder einstückig mit der Koppelstange ausgebildet ist, oder auf einen Schwenkhebel einer Übertragungsstange wirkt, die mit der Koppelstange der mindestens zweiten Jalousie gekoppelt ist und wobei die Koppelstange der ersten Jalousie eine zur Kulisse der Kulissenstange komplementäre Kulisse aufweist, in die der zweite Zapfen des Aktuators eingreift. Auch der zweite Zapfen kann auf einer mit dem Aktuator drehfest verbundenen Kurbelscheibe angeordnet sein.

Bei dieser zweiten Ausführungsform der Erfindung übernimmt die Kulisse der Koppelstange mit dem zweiten exzentrischen Zapfen die Aufgabe der Kupplung der ersten Ausführungsform der Erfindung.

Die Radien beider Kulissen entsprechen dem Abstand der ihnen zugeordneten exzentrischen Zapfen von der Drehachse des Aktuators. Vorzugsweise erstrecken sich beide teilkreisförmigen Kulissen über einen Winkelbereich von 80° bis 350°, insbesondere bevorzugt über einen Winkelbereich von 80° bis 100°. Es ist jedoch nicht erforderlich, dass der Winkelbereich beider Kulissen gleich ist.

Beispielsweise kann sich die teilkreisförmige Ausnehmung einer Kulisse über 180° und die der anderen über 90° erstrecken.

Der Drehwinkelbereich des Aktuators erstreckt sich vorzugsweise über einen Winkel von 160° bis 180°. Der Abstandswinkel zwischen den beiden exzentrischen Zapfen des Aktuators kann 70° bis 110°, vorzugsweise 80° bis 100°, insbesondere bevorzugt etwa 90°, betragen.

Weitere Einzelheiten der Erfindung werden in den anhängenden Figuren näher erläutert. Gleiche Bezugszeichen in den unterschiedlichen Figuren bezeichnen gleiche funktionale Elemente der Erfindung.
Fig. 1 zeigt eine perspektivische Gesamtansicht der erfindungsgemäßen Jalousieanordnung bei nebeneinander angeordneten Haupt- und Nebenjalousien;
Fig. 2 zeigt eine entsprechende Darstellung für übereinander angeordnete Haupt- und Nebenjalousien.
Fig. 3 zeigt vergrößerte perspektivische Einzelansichten von Kurbelscheibe, Kulissenstange und Koppelstange;
Fig. 4 zeigt die in Fig. 2 dargestellten Elemente im Zusammenbau;
Fig. 5 zeigt eine alternative Ausführungsform von Kulissenstange und Koppelstange;
Fig. 6 zeigt zwei verschiedene Zustände des Zusammenwirkens von Kurbelscheiben, Kulissenstange und Koppelstange in perspektivischer Ansicht;
Fig. 7 zeigt fünf Betriebszustände der sequentiellen Jalousieschaltung;
Fig. 8 zeigt stark abstrahiert fünf Betriebszustände der Lamellenjalousien;
Fig. 9 zeigt mögliche Formen von teilkreisförmigen Kulissen.

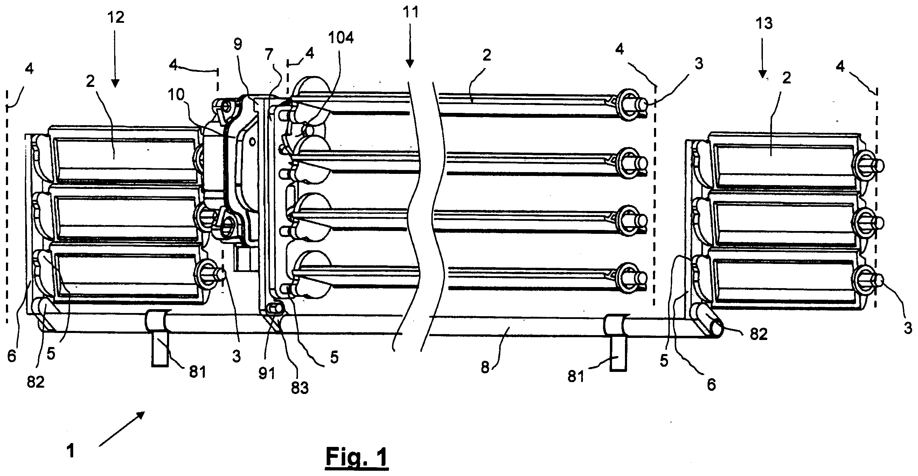

Gemäß Fig. 1 weist die dargestellte Jalousieanordnung 1 beispielhaft eine Hauptjalousie 11 und zwei Nebenjalousien 12 und 13 auf, wobei die Nebenjalousien seitlich neben der Hauptjalousie angeordnet sind. Die Hauptjalousie 11 ist offen mit horizontal stehenden Lamellen 2 und die Nebenjalousien sind geschlossen mit vertikal gestellten Lamellen 2 dargestellt. Die Lamellen 2 weisen seitliche Zapfen 3 auf, die in den Seitenwänden des vorne und hinten offenen Jalousiegehäuses, das nicht dargestellt ist, drehbar gelagert sind. Die Seitenwände des Jalousiegehäuses sind durch die gestrichelten Linien 4 angedeutet. Jede der Lamellen weist seitlich angeordnete zur Drehachse der jeweiligen Lamelle einen exzentrischen Zapfen 5 auf, die in vertikal linear bewegliche Koppelstangen 6 bzw. 7 eingreifen und die Drehbewegung der Lamellen einer Jalousie synchronisieren. Die Anordnung weist ferner eine Übertragungsstange 8 mit einer zu den Drehachsen der Lamellen 2 parallelen Drehachse. Die Übertragungsstange ist am Gehäuse der Jalousieanordnung ortsfest drehbar gelagert 81. Die Übertragungsstange 8 ist mit den Koppelstangen 6 und der Kulissenstange 9 über mit der Übertragungsstange drehfest verbundene Schwenkhebel 82 bzw. 83 verbunden. Die Länge der Schwenkhebel kann der Exzentrizität der ihnen jeweils zugeordneten Lamellendrehzapfen 5 entsprechen. In der Figur sind ferner die Kulissenstange 9 und der Aktuator 10, der vorzugsweise ein elektrisch angetriebener Schrittmotor ist, dargestellt.

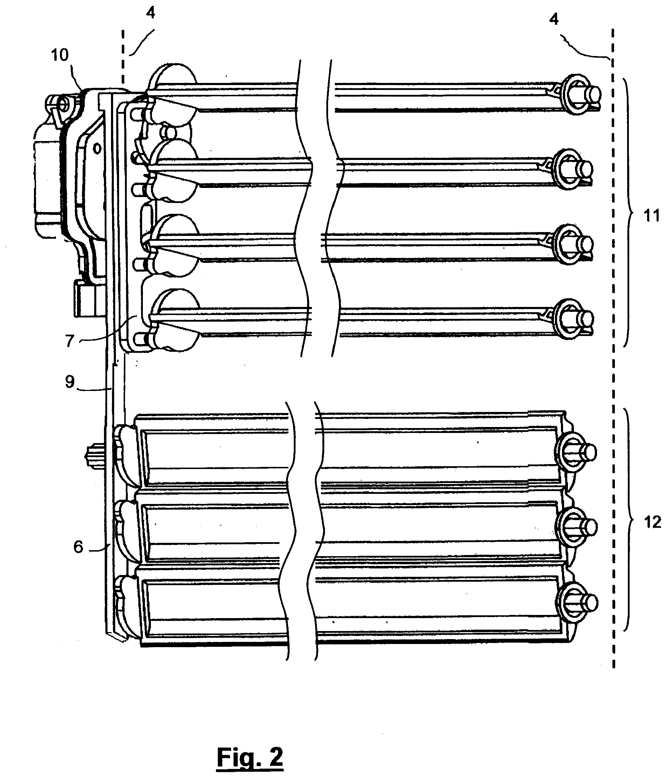

Fig. 2 zeigt eine Ausführungsform der Erfindung, bei der die Haupt- und die Nebenjalousie übereinander angeordnet sind. Die (obere) Hauptjalousie ist offen, die (untere) Nebenjalousie geschlossen. Bei im Wesentlichen fluchtender Anordnung der Zapfen 3 der Lamellen beider Jalousien ist eine Übertragungsstange nicht erforderlich. Die Kulissenstange 9 kann einstückig mit der Koppelstange 6 für die Nebenjalousie ausgebildet sein. Haben die Jalousien unterschiedliche Ausdehnung in der Breite, ist die Übertragungsstange mit Schwenkhebeln erforderlich,

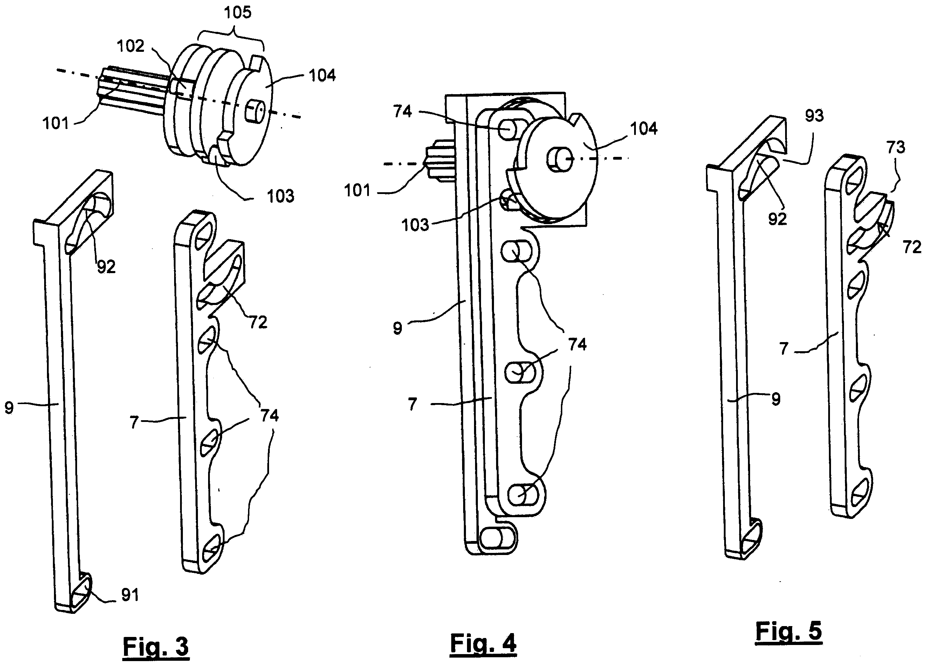

Fig. 3 zeigt die Kulissenstange 9, die Koppelstange 7 und die vom Aktuator 10 antreibbare Drehachse 101 im Detail. Die Achse des Aktuators weist eine mit der Achse 101 drehfest verbundene Kurbelscheibe 105 auf mit zwei auf dieser angeordnete exzentrische Zapfen 102 und 103. Die Zapfen sind um 80° bis 110° bezüglich der Rotation der Achse 101 umfangsversetzt. Die Kulissenstange 9 weist eine teilkreisförmige Ausnehmung 92 ("Kulisse") auf, in die nach dem Zusammenbau der Zapfen 102 eingreift.

Der Radius der Kulisse 92 entspricht dem Abstand des Zapfens 102 von der Achse 101 der Kurbelscheibe. Die Kulissenstange 9 ist vorzugsweise an einer Gehäusewand geführt so dass ihre Bewegbarkeit auf eine Linearbewegung beschränkt ist. Die Koppelstange 7 weist eine der teilkreisförmigen Ausnehmung 92 gegenüberliegende Ausnehmung 72 auf, die komplementär zur Kulisse 92 gekrümmt ist und in die nach dem Zusammenbau der Zapfen 103 der Kurbelscheibe 105 eingreift. In die Ausnehmungen 74 greifen die exzentrischen Zapfen 5 der Lamellen der Jalousie 11 ein. Die teilkreisförmigen Ausnehmungen 72 und 92 erstrecken sich vorzugsweise auf einen Umfangswinkelbereich von 80° bis 90°. Auf der Achse 101 des Aktuators kann ferner eine Drehwinkelbegrenzungsscheibe 104 drehfest angeordnet sein, die den Drehwinkel der Achse auf 160° bis 180° begrenzt.

Fig. 4 zeigt die in Fig. 2 dargestellten Elemente nach dem Zusammenbau.

Fig. 5 zeigt eine alternative Ausführungsform der Koppelstange 7 und der Kulissenstange 9, wobei die Kulissen 72 und 92 an ihrem Ende offen 73, 93 sind. Dies hat Montagevorteile, indem die Kulissen von Kulissenstange 9 und Koppelstange 7 in die Zapfen 102 und 103 der Kurbelscheibe 105 eingehängt werden können. Darüber hinaus ist bei lastabhängiger Steuerung des Aktuators eine on-board-detetion (OBD) möglich, wenn eines der Elemente zur Schaltung der Jalousien defekt ist, z.B. die Zapfen 3 und 5 nicht mehr eingreifen. Der Aktuator würde dann über die Kulisse hinaus weiterdrehen, was die Motorsteuerung detektiert und eine entsprechnende Warnnachricht an den Fahrer gibt. Die Anschläge für das Drehen der Lamellen sind am Gehäuse 4 angeordnet.

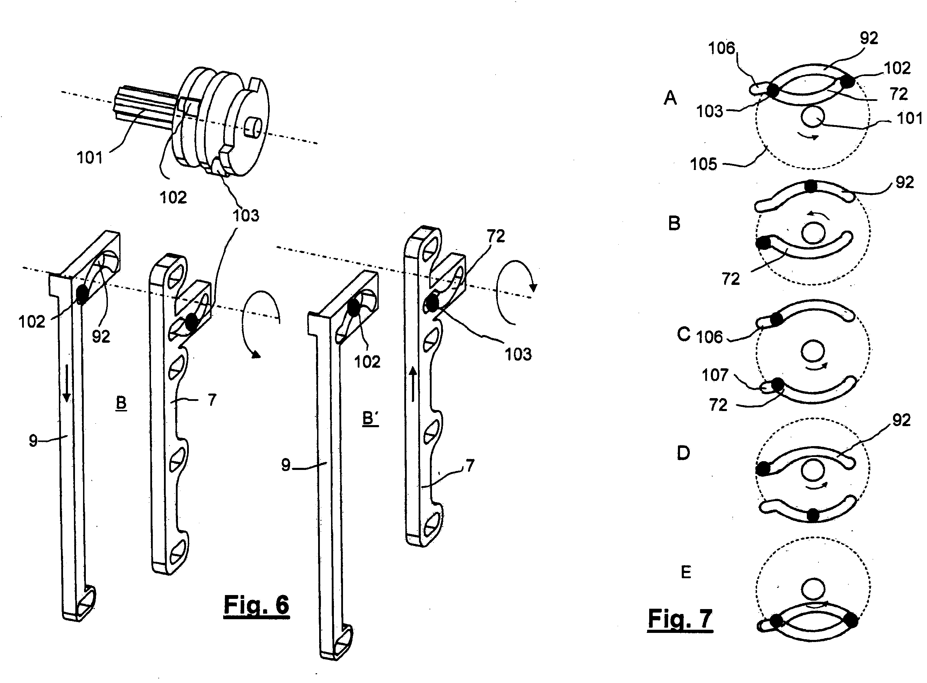

In Fig. 6 sind die Positionen der Zapfen 102 und 103 in zwei Betriebszuständen B und B' innerhalb der Kulissen 72 und 92 als schwarze Punkte und die Drehrichtung der Achse 101 eingezeichnet. Im Betriebszustand B (entsprechend dem Betriebszustand D in Fig. 7) drückt der Zapfen 102 die Kulissenstangestange 9 nach unten. Die Linearbewegung der Kulissenstangestange 9 bewirkt über den Schwenkhebel 83 eine Rotationsbewegung der Übertragungsstange 8, die von den Koppelstangen 6 der Nebenjalousien 12 und 13 über die Schwenkhebel 82 aufgenommen wird und über die exzentrischen Zapfen 5 der Lamellen der Nebenjalousien 12 und 13 in eine Drehbewegung der Lamellen umgesetzt wird. Der Zapfen 103 bewegt sich in der Kulisse 72 der Koppelstange 7 ohne diese zu bewegen. Im Betriebszustand B', der dem Betriebszustand B in Fig. 7 bei umgekehrter Drehrichtung entspricht, drückt der Zapfen 103 die Koppelstange 7 nach oben, die in die Ausnehmungen 74 der Koppelstangen 7, in die die exzentrischen Zapfen 5 der Lamellen der Hauptjalousie 11 eingreifen, in eine Rotationsbewegung der Lamellen der Hauptjalousie 11 übertragen. Gleichzeitig durchwandert der Zapfen 102 die Kulisse 92 ohne die Kulissenstange 9 zu bewegen. sodass die Nebenjalousien in ihrer Position verharren.

Fig. 7 zeigt die relative Lage von der Kulisse 92 der Kulissenstange 9 und der Kulisse 72 der Koppelstange 7 in Richtung der Drehachse des Aktuators gesehen in fünf Betriebszuständen A, B, C, D und E. Der strichlierte Kreis 105 deutet den Weg der Zapfen 102 und 103 an. Im Betriebszustand A sind Haupt- und Nebenjalousien beispielsweise geschlossen (Kurbelwellenstellung 0°). Versetzt nun der Aktuator die Kurbelscheibe in Rotation, wird die Kulisse 72 und damit die Koppelstange 7 nach unten bewegt, während sich der Zapfen 102 durch die Kulisse 92 bewegt ohne eine Bewegung der Kulissenstange 9 zu bewirken.

Im Betriebszustand B ist ein Zwischenzustand (Kurbelwellenstellung 45°) erreicht, bei dem die Nebenjalousie 11 halb geöffnet ist. Im Betriebszustand C (Kurbelwellenstellung 90°) hat der Zapfen 102 das Ende der teilkreisförmigen Kulisse 92 erreicht und die Nebenjalousie ist geöffnet. Bei weiterer Rotation der Kurbelscheibe wird die Kulisse 92 nach unten bewegt wodurch die Nebenjalousien geschlossen werden. Im Betriebszustand D (Kurbelwellenstellung 135°) ist ein Zwischenzustand erreicht, bei dem die Nebenjalousien geöffnet und die Hauptjalousie halb geöffnet sind. Im Betriebszustand E (Kurbelwellenstellung 180°) sind schließlich Haupt- und Nebenjalousien geöffnet. Das Schließen der Jalousien erfolgt durch Umkehr der Drehrichtung der Kurbelwelle 105. Die Bezugszeichen 106, 107 bezeichnen einen horizontalen Bereich der Kulissen, der vorzugsweise linear und im rechten Winkel zur Linearbeweglichkeit von Kulissenstange und Koppelstange zum Ausgleich der Abweichung der Kreisbewegung der Zapfen 102 und 103 von der Linearbewegung von Koppelstange 7 und Kulissenstange 9 ausgebildet ist.

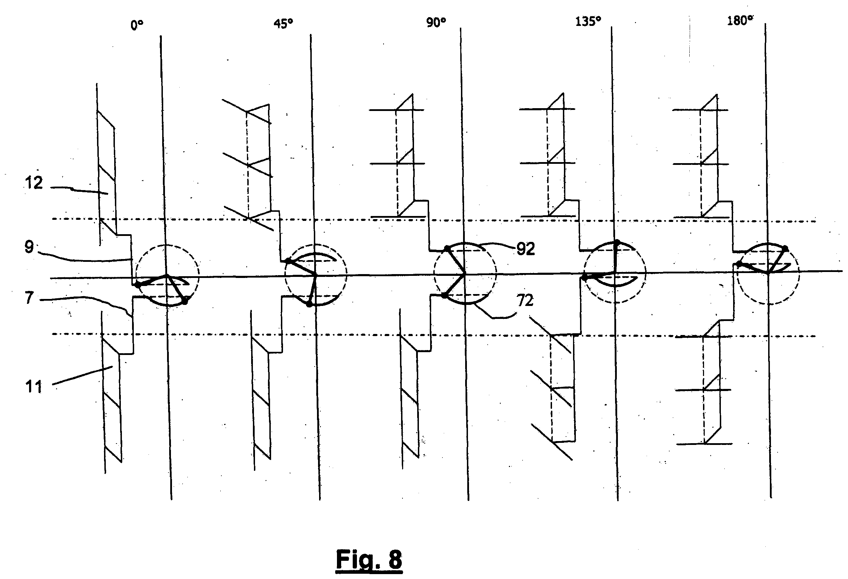

Fig. 8 ist eine stark abstrahierte Darstellung von Haupt- und Nebenjalousie 11 und 12 und deren Offen- bzw. Geschlossenstellung in Abhängigkeit von der Drehwinkelstellung (0°, 45°, 90°, 135° und 180°) der Kurbelwelle 105 und den darauf in festem Winkel (hier ca. 100°) angeordneten exzentrischen Zapfen 102 und 103, die in die Kulissen 92 bzw. 72 von Kulissenstange 9 bzw. Koppelstange 7 eingreifen.

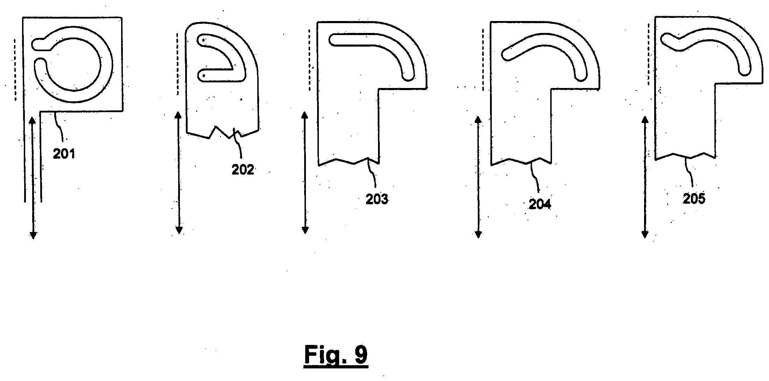

Fig. 9 zeigt verschiedene Möglichkeiten zur Ausgestaltung der Kulissen 92 bzw. 72. Dabei können die Kulissen 92 und 72 durchaus unterschiedlich ausgebildet sein. Beispielsweise erlaubt es die Kulisse 201 den Drehwinkelbereich um die Achse 101 so zu vergrößern, dass wahlweise die eine oder die andere Jalousie zuerst geöffnet bzw. geschlossen wird.

Da in den meisten Fahrsituationen eines Kraftfahrzeugs die den Fahrzeugkühler abdeckende Hauptjalousie geöffnet ist, ist eine sequentielle Schaltung der Jalousien im Allgemeinen ausreichend. Jedoch kann durch Zulassung der Umkehr der Drehrichtung des Aktuators in der Betriebssituation A gemäß Fig. 7 eine Umkehr der sequentiellen Schaltung bewirkt werden. Es ist dann lediglich erforderlich, den zulässigen Drehwinkel der Drehwinkelbegrenzungsscheibe 104 entsprechend anzupassen. Ferner kann dadurch wahlweise nur die eine oder die andere Jalousie geschlossen werden. Bevorzugt weisen dann beide Enden der Kulissen mit einem Ausgleichsbereich 106 versehen.

Es ist nicht erforderlich, dass die Radien der Kulissen-Teilkreise 72 und 92 gleich sind. Werden unterschiedliche Radien gewählt, ist es lediglich erforderlich, den Abstand der einer Kulisse zugeordneten exzentrischen Zapfen 102 und 103 von der Drehachse 101 entsprechend zu wählen. So ist beispielsweise möglich, durch Wahl eines größeren Radius für die Kulisse 92 der Kulissenstange 9 die Linearbewegung der Kulissenstange 9 zu verlängern.

Ebenso ist es nicht erforderlich, dass die Schwenkhebel 82 und 83 (Fig. 1) der Übertragungsstange 8 gleichlang sind. Wird beispielsweise der Schwenkhebel 83 kürzer gewählt als der Schwenkhebel 82, kann eine kürzere Linearbewegung der Kulissenstange über die Übertragungsstange 8 in eine Rotation der Lamellen der Nebenjalousie über einen größeren Winkelbereich bewirkt werden.

Nach einer weiteren Ausführungsform der Erfindung, kann der exzentrische Zapfen 103 (Fig. 2) durch eine Kupplung ersetzt sein, und die Achse 101 bei eingekuppelter Kupplung direkt auf die Schwenkachse 3 einer der Lamellen der Hauptjalousie 11 wirken.

Nachdem die Hauptjalousie geschlossen ist, kann die Kupplung ausgekuppelt werden und der Zapfen 102 am anderen Ende der Kulisse 92 der Kulissenstange 9 angekommen ist, können dann nach Entkupplung durch weitere Rotation des Aktuators durch Linearbewegung der Kulissenstange 9 die Nebenjalousien 12 und 13 wie beschrieben geschlossen werden.

## Patentansprüche

1. Vorrichtung zur sequentiellen Schaltung von mindestens einer ersten (11) und mindestens einer zweiten Lamellenjalousie (12, 13), deren Lamellen (2) mittels mindestens je einer Koppelstange (6) synchron drehend zum Öffnen und Schließen der Jalousien bewegbar sind, umfassend
einen Aktuator (10) zur Erzeugung einer Drehbewegung der Lamellen um 80° bis 90°,
einer Kupplung zur drehbaren Ankupplung des Aktuators an eine Lamelle der ersten Lamellenjalousie (11),
eine Kulissenstange (9), die eine teilkreisförmige Kulisse (92) aufweist und
eine Übertragungsstange (8),
wobei der Aktuator einen zu seiner Drehachse (101) parallelen exzentrischen Zapfen (102) aufweist, der in die teilkreisförmige Kulisse der Kulissenstange eingreift,
**dadurch gekennzeichnet,**
**dass** eine ortsfest drehbar gelagerte Übertragungsstange (8) vorgesehen ist, die an ihr befestigte Schwenkhebel (82) und (83) aufweist, wobei die Kulissenstange (9) auf den Schwenkhebel (83) zur Drehung der Übertragungsstange wirkt und der Schwenkhebel (82) auf die Koppelstange (6) der mindestens zweiten Jalousie wirkt, sodass die Linearbewegung der Kulissenstange (9) über die Übertragungsstange auf die Koppelstange (6) der mindestens zweiten Lamellenjalousie (12, 13) übertragbar ist.

2. Vorrichtung zur sequentiellen Schaltung von mindestens einer ersten (11) und mindestens einer zweiten (12, 13) Lamellenjalousie, wobei die Lamellen (2) einer Lamellenjalousie mittels mindestens je einer dieser zugeordneten Koppelstange (6, 7) synchron drehend zum Öffnen und Schließen der Lamellenjalousien bewegbar sind, umfassend
einen Aktuator (10) zur Erzeugung einer Drehbewegung der Lamellen um 80° bis 90°,
wobei der Aktuator zwei zu seiner Drehachse (101) mit dieser drehfest verbundene parallele exzentrische Zapfen (102, 103) aufweist,
eine Kulissenstange (9), die eine teilkreisförmige Kulisse (92) aufweist,
wobei einer der Zapfen (102) in die teilkreisförmige Kulisse (92) der Kulissenstange (9) eingreift,
wobei die Koppelstange (7) der ersten Lamellenjalousie (11) eine zur Kulisse der Kulissenstange komplementäre teilkreisförmige Kulisse (72) aufweist, in die der andere Zapfen (103) des Aktuators eingreift, wodurch die Koppelstange (7) in eine geführte Linearbewegung versetzbar ist
und eine Linearbewegung der Kulissenstange (9) auf die Koppelstange (6) der zweiten Lamellenjalousie (12) übertragbar ist,
**dadurch gekennzeichnet, dass**
die Zapfen (102) und (103) zur Drehachse (101) um 70° bis 110° umfangsversetzt sind.

3. Vorrichtung nach Anspruch 1, wobei die
Übertragungsstange (8) an dem Gehäuse der Jalousieanordnung ortsfest drehbar befestigt ist.

4. Vorrichtung nach Anspruch 2, wobei die Bewegung der Kulissenstange (9) auf die Koppelstange (6) durch einstückige Ausbildung von Kulissenstange (9) und Koppelstange (6) übertragen wird.

5. Vorrichtung nach einem der Ansprüche 1 bis 4, wobei der Radius der Kulisse (92) der Kulissenstange (9) dem Abstand des Zapfens (102) von der Drehachse (101) des Aktuators entspricht.

6. Vorrichtung nach einem der Ansprüche 2 bis 5, wobei der Radius der Kulisse (72) der Koppelstange (7) der ersten Jalousie (11) dem Abstand des Zapfens (103) von der Drehachse (101) des Aktuators entspricht.

7. Vorrichtung nach einem der Ansprüche 1 bis 6, wobei die Kulissen (72, 92) zumindest einseitig einen 75° bis 105° zur Bewegungsrichtung der jeweiligen Kulissenstange (9) und / oder Koppelstange (7) abgewinkelten, Ausgleichsfortsatz (106, 107) aufweisen.

8. Vorrichtung nach einem der Ansprüche 1 bis 7, wobei die Kulisse (92) der Kulissenstange (9) und/oder die Kulisse der Koppelstange (7) einseitig offen sind.

9. Vorrichtung nach einem der Ansprüche 1 bis 8, wobei auf der Achse (101) des Aktuators eine Drehwinkelbegrenzungsscheibe (104) drehfest angeordnet ist.

10. Vorrichtung nah einem der Ansprüche 1 bis 9, wobei die Kulisse (92) mit dem dieser zugeordnete exzentrische Zapfen (102) und die Kulisse (72) mit dem dieser zugeordneten exzentrischen Zapfen so verschaltet sind, dass die jeweiligen Linearbewegungen von Kulissenstange 9 und Koppelstange 7 sequentiell erfolgen.

## Claims

1. Device for sequentially switching at least one first (11) and at least one second Venetian blind (12, 13), the slats (2) of which can be moved synchronously in rotation by means of at least one respective coupling rod (6) to open and close the blinds, comprising
an actuator (10) for generating a rotary movement of the slats through 80° to 90°,
a coupling for rotatably coupling the actuator to a slat of the first Venetian blind (11),
a link rod (9) having a part-circular guide (92), and
a transmission rod (8),
wherein the actuator has an eccentric pin (102) parallel to its axis of rotation (101), which engages in the part-circular guide of the link rod,
**characterised in that**
a fixed, rotatably mounted transmission rod (8) is provided, which has pivot levers (82) and (83) attached thereto, wherein the link rod (9) acts on the pivot lever (83) to rotate the transmission rod and the pivot lever (82) acts on the coupling rod (6) of the at least second Venetian blind, so that the linear movement of the link rod (9) can be transmitted via the transmission rod to the coupling rod (6) of the at least second Venetian blind (12, 13).

2. Device for sequentially switching at least one first (11) and at least one second (12, 13) Venetian blind, wherein the slats (2) of a Venetian blind can be moved synchronously in rotation by means of at least one respective coupling rod (6, 7) associated therewith for opening and closing the Venetian blinds, comprising
an actuator (10) for generating a rotary movement of the slats through 80° to 90°,
wherein the actuator has two eccentric pins (102, 103) parallel to its axis of rotation (101) and connected to it in a rotationally fixed manner,
a link rod (9) having a part-circular guide (92),
wherein one of the pins (102) engages in the part-circular guide (92) of the link rod (9),
wherein the coupling rod (7) of the first Venetian blind (11) has a part-circular guide (72) which is complementary to the guide of the link rod and in which the other pin (103) of the actuator engages, as a result of which the coupling rod (7) can be set into guided linear motion
and linear movement of the link rod (9) can be transmitted to the coupling rod (6) of the second Venetian blind (12),
**characterised in that** the pins (102) and (103) are circumferentially offset to the axis of rotation (101) by 70° to 110°.

3. Device according to claim 1, wherein the transmission rod (8) is fixedly and rotatably mounted on the housing of the Venetian blind assembly.

4. Device according to claim 2, wherein the movement of the link rod (9) is transmitted to the coupling rod (6) by the link rod (9) and the coupling rod (6) being integrally formed.

5. Device according to any one of claims 1 to 4, wherein the radius of the guide (92) of the link rod (9) corresponds to the spacing of the pin (102) from the axis of rotation (101) of the actuator.

6. Device according to any one of claims 2 to 5, wherein the radius of the guide (72) of the coupling rod (7) of the first Venetian blind (11) corresponds to the spacing of the pin (103) from the axis of rotation (101) of the actuator.

7. Device according to any one of claims 1 to 6, wherein the guides (72, 92) have, at least on one side, a compensating extension (106, 107) angled at 75° to 105° to the direction of movement of the respective link rod (9) and/or coupling rod (7).

8. Device according to any one of claims 1 to 7, wherein the guide (92) of the link rod (9) and/or the guide of the coupling rod (7) are open on one side.

9. Device according to any one of claims 1 to 8, wherein a rotational angle limiting disc (104) is non-rotatably arranged on the axis (101) of the actuator.

10. Device according to any one of claims 1 to 9, wherein the guide (92) with the eccentric pin (102) associated therewith and the guide (72) with the eccentric pin associated therewith are connected in such a way that the respective linear movements of the link rod 9 and the coupling rod 7 take place sequentially.

## Revendications

1. Dispositif de commutation séquentielle d'au moins un premier (11) et d'au moins un second store vénitien (12, 13), dont les lattes (2) pivotant de manière synchrone au moyen d'au moins chacune d'une tige de couplage (6) pour ouvrir et fermer les stores sont mobiles, comprenant
un actionneur (10) pour produire un mouvement rotatif des lattes de 80° à 90°,
un couplage pour le couplage rotatif de l'actionneur sur une latte du premier store vénitien (11),
une tige à coulisses (9), qui présente une coulisse en forme de cercle partiel (92) et une tige de transmission (8),
dans lequel l'actionneur présente un tenon excentrique (102) parallèle à son axe de rotation (101), qui entre en prise dans la coulisse en forme de cercle partiel de la tige à coulisses,
**caractérisé en ce que**
une tige de transmission (8) montée de manière à pouvoir pivoter fixement est prévue, qui présente des leviers pivotants (82) et (83) fixés sur celle-ci, dans lequel la tige à coulisses (9) agit sur le levier pivotant (83) pour mettre en rotation la tige de transmission et le levier pivotant (82) agit sur la tige de couplage (6) dudit au moins second store vénitien, de sorte que le mouvement linéaire de la tige à coulisses (9) peut être transmis par l'intermédiaire de la tige de transmission sur la tige de couplage (6) dudit au moins second store vénitien (12, 13).

2. Dispositif de commutation séquentielle d'au moins un premier (11) et d'au moins un second (12, 13) store vénitien, dans lequel les lattes (2) d'un store vénitien pivotant de manière synchrone au moyen d'au moins chacune desdites tiges de couplage (6, 7) associées pour ouvrir et fermer les stores vénitien sont mobiles, comprenant
un actionneur (10) pour produire un mouvement rotatif des lattes de 80° à 90°,
dans lequel l'actionneur présente deux tenons excentriques (102, 103) parallèles à son axe de rotation reliés de manière solidaire en rotation avec celui-ci,
une tige à coulisses (9), qui présente une coulisse en forme de cercle partiel (92),
dans lequel l'un des tenons (102) entre en prise dans la coulisse en forme de cercle partiel (92) de la tige à coulisses (9),
dans lequel la tige de couplage (7) du premier store vénitien (11) présente une coulisse en forme de cercle partiel (72) complémentaire à une coulisse de la tige à coulisses, dans laquelle l'autre tenon (103) de l'actionneur entre en prise, moyennant quoi la tige de couplage (7) peut être déplacée selon un mouvement linéaire guidé
et un mouvement linéaire peut être transmis de la tige à coulisses (9) sur la tige de couplage (6) du second store vénitien (12),
**caractérisé en ce que** les tenons (102) et (103) sont décalés sur la périphérie de 70° à 110° par rapport à l'axe de rotation (101).

3. Dispositif selon la revendication 1, dans lequel la tige de transmission (8) est fixée sur le boîtier de l'agencement du store vénitien de manière à pouvoir pivoter fixement.

4. Dispositif selon la revendication 2, dans lequel le mouvement de la tige à coulisses (9) est transmis sur la tige de couplage (6) par la réalisation en une seule pièce de la tige à coulisses (9) et de la tige de couplage (6).

5. Dispositif selon l'une quelconque des revendications 1 à 4, dans lequel le rayon de la coulisse (92) de la tige à coulisses (9) correspond à la distance entre le tenon (102) et l'axe de rotation (101) de l'actionneur.

6. Dispositif selon l'une quelconque des revendications 2 à 5, dans lequel le rayon de la coulisse (72) de la tige de couplage (7) du premier store vénitien (11) correspond à la distance entre le tenon (103) et l'axe de rotation (101) de l'actionneur.

7. Dispositif selon l'une quelconque des revendications 1 à 6, dans lequel les coulisses (72, 92) présentent au moins unilatéralement un prolongement de compensation (106, 107) incliné de 75° à 105° par rapport à la direction de déplacement de chaque tige à coulisses (9) et/ou tige de couplage (7).

8. Dispositif selon l'une quelconque des revendications 1 à 7, dans lequel la coulisse (92) de la tige à coulisses (9) et/ou la coulisse de la tige de couplage (7) sont ouvertes unilatéralement.

9. Dispositif selon l'une quelconque des revendications 1 à 8, dans lequel un disque de limitation d'angle de rotation (104) est disposé de manière solidaire en rotation sur l'axe (101) de l'actionneur.

10. Dispositif selon l'une quelconque des revendications 1 à 9, dans lequel la coulisse (92) avec laquelle ledit tenon excentrique (102) associé et la coulisse (72) avec laquelle ledit tenon excentrique associé sont raccordés de telle manière que les mouvements linéaires respectifs de la tige à coulisses (9) et de la tige de couplage (7) s'effectuent de manière séquentielle.
